# EUROPÄISCHE PATENTSCHRIFT

(11) **EP 2 189 351 B1**
(45) Veröffentlichungstag und Bekanntmachung des Hinweises auf die Patenterteilung: **15.02.2012**
(21) Anmeldenummer: 09175486.1
(22) Anmeldetag: 10.11.2009
(51) Int. Cl.: B61D 17/08, B60R 13/02, B60Q 3/02

(54) **Deckenteil zur Fahrzeuginnenverkleidung**
Ceiling element for the internal lining of vehicles
Elément de plafond pour le revêtement intérieur de véhicules

(30) Priorität: 21.11.2008 DE 202008015417 U
(43) Veröffentlichungstag der Anmeldung: 26.05.2010
(73) Patentinhaber: Lakowa Gesellschaft für Kunststoffbe- und -verarbeitung mbH, 02681 Wilthen (DE)
(72) Erfinder: Liebscher, Ralf, 02633 Gaußig (DE); Kreuziger, Hans-Jörg, 02625 Bautzen (DE)
(74) Vertreter: Sperling, Thomas

(56) Entgegenhaltungen:
- EP-A- 1 772 340
- DE-U1- 29 607 932
- US-A- 4 171 535

## Beschreibung

Die Erfindung betrifft ein Deckenteil zur Fahrzeuginnenverkleidung, insbesondere für die Decke von Fahrzeugen des öffentlichen Personenverkehrs.

Dazu bietet die Praxis des Schienenfahrzeugbaus eine Deckenverkleidung, die zumeist in Metallblech ausgeführt ist. Die Beleuchtung wird, als direkte Zentralbeleuchtung ausgeführt, an der Deckenverkleidung befestigt und mit einer Leuchtenverkleidung versehen. Diese Verkleidungen bestehen üblicherweise aus Kunststoff.

Dieser Lösung haftet der Nachteil an, dass die Deckenverkleidung, die Beleuchtung und die Leuchtenverkleidung bei der Montage des Fahrzeugs mit hohem Aufwand zusammengefügt werden müssen.

Als weitere Lösung bietet die Praxis bislang eine üblicherweise in Kunststoff ausgeführte Deckenbaugruppe, an die während der Montage die Beleuchtung angebracht wird, die zumeist aus einer oder zwei Leuchtstoffröhren besteht oder auch als Leuchte anderer Bauart ausgeführt sein kann. Auch hierbei erfolgt eine gesonderte Verkleidung der Leuchte.

Auch dieser Lösung haftet der Nachteil an, dass die Deckenverkleidung, die Beleuchtung und die Leuchtenverkleidung bei der Montage des Fahrzeugs mit hohem Aufwand zusammengefügt werden müssen.

Aus der EP 1 772 340 A2 geht ein Innenausbaumodul für Deckenbereiche von Fahrzeugen, insbesondere Schienenfahrzeugen für den Personenverkehr, hervor. Das Modul weist einen an geeigneten Tragelementen im Dachbereich montierbaren Grundrahmen zur Befestigung von Teilen der Innendeckenverkleidung sowie von Baugruppenteilen, wie der Beleuchtung, auf. Dem Grundrahmen, der als Adapterrahmen mit an die jeweiligen Tragelemente anpassbaren Anschlagmitteln ausgebildet ist, ist ein schwenkbar befestigter Deckentragrahmen zugeordnet. Der Deckentragrahmen trägt die sich über die Fahrzeugbreite erstreckende Innendeckenverkleidung.

Auch die DE 296 07 932 offenbart eine Innenverkleidung des Deckenbereiches von Fahrzeugen, insbesondere Schienenfahrzeugen, die aus Deckenplatten und Leuchten ausgebildet ist. Die Deckenplatten sind an ihren in Fahrzeuglängsrichtung verlaufenden Längskanten von Profilen lösbar aufgenommen. Die Leuchten sind fahrzeuglängsmittig angeordnet und bilden einen Teil eines Luftkanals. Dabei ist zu jeder Leuchte ein Grundkörper beabstandet in einer dachförmigen Mulde des Luftkanals angeordnet und als Teil von in Luftaustrittsöffnungen endenden Luftverteilungskanälen ausgebildet.

Eine weitere in der Praxis angewandte Variante ist eine getrennte Lösung, bei der die Deckenverkleidung angebracht wird und eine separate Beleuchtungsbaugruppe, bei der Leuchte und Verkleidung bereits zu einer Baugruppe zusammengefasst sind, vorgesehen ist. Hierbei ist zwar die Montage gegenüber den zuvor beschriebenen Varianten bereits erleichtert, jedoch sind erhöhte Aufwendungen bei der Montage und erforderlichenfalls zur Anpassung der unterschiedlichen Baugruppen aneinander erforderlich.

Weitere Nachteile und Mängel sind:
- die Befestigungsmittel zur Montage während des Fahrzeugaufbaus sind schwerer gegen selbstständiges Lösen durch Vibrationen zu sichern,
- offene, im Fahrgastraum befindliche Leuchten verschmutzen leicht und können Ziel von Vandalismus sein und sind in zerstörtem oder beschädigtem Zustand eine Gefahr hinsichtlich eines elektrischen Schlags bei Berührung,
- die Lichtfarbe kann allein durch Auswahl des Leuchtmittels erfolgen,
- die Zugänglichkeit der Decke, z. B. zur Überprüfung von Leitungsführungen im Deckenbereich, ist eingeschränkt und nur durch Demontage von Beleuchtung und Deckenverkleidung bzw. begrenzt durch Öffnungen in der Deckenverkleidung möglich.

Der Erfindung liegt deshalb die Aufgabe zugrunde, ein Deckenteil zur Fahrzeuginnenverkleidung derart weiterzubilden, dass die Montage im Fahrzeug erleichtert und eine sichere Abdeckung der Leuchten möglich wird.

Die Aufgabe wurde gelöst durch ein Deckenteil zur Fahrzeuginnenverkleidung, das eine Strukturbaugruppe aus Profilelementen umfasst, die in Form einer Überkreuzverstärkung angeordnet sind. Weiterhin umfasst das Deckenteil ein Flächenelement, das als Hutprofil mit trapezförmigen Schenkeln aus einem lichtdurchlässigen Kunststoff ausgebildet ist, und mehrere Funktionsbereiche aufweist. Die Strukturbaugruppe ist mit der Rückseite des Flächenelementes und dieses dreidimensional stabilisierend verbunden. Teilbereiche des Flächenelementes weisen auf der Rückseite eine satinierte Beschichtung und auf der Vorderseite eine lichtdichte Beschichtung auf. Dadurch werden auf dem Flächenelement licht-, luft- und schalldurchlässige Funktionsbereiche ausgebildet. Weiterhin ist am Flächenelement ein Bereich mit durchgängigen Ausnehmungen am Flächenelement ausgebildet.

Die Profilelemente der Strukturbaugruppe sind als Kunststoffhutprofile, Aluminiumvierkantformteile und Aluminiumvierkanthohlprofile ausgebildet. Zudem ist die Strukturbaugruppe und/oder das Flächenelement so ausgebildet, dass eine Beleuchtungsbaugruppe aufnehmbar ist.

Das Flächenelement besteht aus einem thermoplastischen Werkstoff. Als durchgängige Ausnehmungen ist eine gestanzte Lochung im Flächenelement vorgesehen.

Der Funktionsbereich der Lichtaustrittsöffnung ist mittels einer lichtdichten Beschichtung der Vorderseite des lichtdurchlässigen Flächenelements durch Maskierung ausgebildet. Die Lichtfarbe beim Austritt des Lichts durch die Lichtaustrittsöffnung aus dem Deckenteil ist mittels der satinierten Beschichtung der Rückseite des Flächenelementes auswählbar.

Am Deckenteil sind nach einer bevorzugten Ausgestaltung der Erfindung Fangseile vorgesehen, die beim Öffnen der Deckenverkleidung das Herunterklappen des Deckenteils begrenzen. Weiterhin sind vorteilhaft ein Scharniersystem und ein Schloss am Deckenteil vorgesehen. Die Beschichtung des Flächenelementes ist als Lack ausgebildet.

Weitere Einzelheiten, Merkmale und Vorteile der Erfindung ergeben sich aus der nachfolgenden Beschreibung eines Ausführungsbeispiels mit Bezugnahme auf die zugehörigen Zeichnungen. Es zeigen:
- Fig. 1:: Deckenteil in perspektivischer Sicht von unten,
- Fig. 2:: Deckenteil in Seitenansicht,
- Fig. 3:: Deckenteil Vorderseite und
- Fig. 4:: Deckenteil Rückseite.

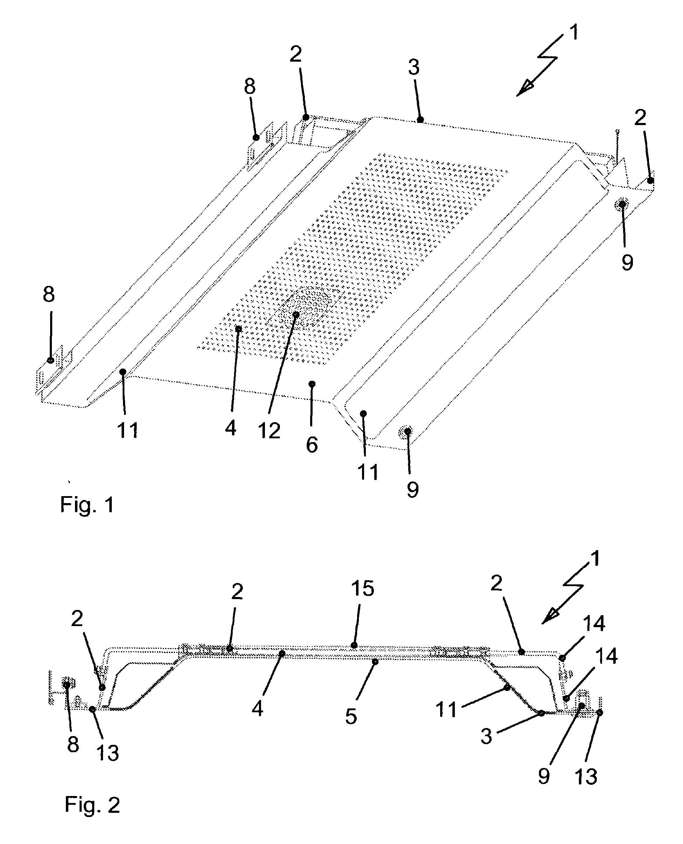

Figur 1 zeigt ein Deckenteil 1 zur Fahrzeuginnenverkleidung in perspektivischer Darstellung, eingebaut im Fahrzeug und von unten aus dem Fahrgastraum heraus betrachtet. Das Flächenelement 3 ist dabei nach oben zur Decke des Fahrzeugs hin gewölbt und bildet ein großes Hutprofil. Nach unten, in das Fahrzeuginnere hinein, sind die Bereiche gewölbt, die die Schlösser 9 sowie die Scharniere 8 aufweisen und als trapezförmige Schenkel ausgeführt sind. Das Flächenelement 3 besteht aus einem lichtdurchlässigen Kunststoff.

Zur Verstärkung des Deckenteils 1 dient die Strukturbaugruppe 2. Diese besteht aus Profilelementen, die in Form einer Überkreuzverstärkung angeordnet und mit der Rückseite 5 des Flächenelements 3 verbunden sind. Dadurch wird das Flächenelement 3 dreidimensional stabilisiert und gegen Verbiegen und Verwinden gesichert.

Das Flächenelement 3 weist verschiedene licht-, luft- und schalldurchlässige Funktionsbereiche auf. Die durchgängigen Ausnehmungen 4, lokal als Lautsprecheröffnung 12 ausgebildet, sind und luft- und schalldurchlässig, die Bereiche mit satinierter Beschichtung, die die Lichtaustrittsöffnung 11 bilden, lichtdurchlässig.

Die Vorderseite 6 des Flächenelements, die in das Wageninnere weist, ist mit lichtdichter Lackierung versehen. Der mittlere Teil des nach oben gewölbten Flächenelements 3 weist die durchgängigen Ausnehmungen 4 auf. Zentral angeordnet im Bereich der durchgängigen Ausnehmungen 4 befinden sich die durchgängigen Ausnehmungen als Lautsprecheröffnung 12. Die Ausnehmungen 4 und 12 sind rasterartig angeordnete Lochungen. Die Ausnehmungen 12, die als Lautsprecheröffnungen ausgebildet sind, weisen einen größeren Durchmesser auf als die Ausnehmungen 4 des übrigens Bereichs. Im übrigen Bereich dienen die durchgängigen Ausnehmungen 4 der Schallabsorption, um eine luftdurchlässige Verbindung zum Fahrgastraum zu schaffen.

Figur 2 zeigt das Deckenteil 1 in seitlicher Ansicht, das heißt in Fahrtrichtung des Fahrzeugs gesehen. Erkennbar ist das Flächenelement 3, das sich im mittleren Bereich nach oben hin wölbt und an den seitlichen Bereichen nach unten, zum Fahrgastraum hin, abfällt. Die abfallenden Bereiche weisen die Lichtaustrittsöffnung 11 auf, einen lichtdurchlässigen Bereich des Flächenelements 3. Dieser wird durch eine Maskierung gebildet, die während des Aufbringens der lichtdichten Beschichtung 6 auf der Vorderseite des Flächenelements 3 erfolgt und den Bereich der Lichtaustrittsöffnung 11 ausspart. Die lichtdichte Lackierung an der Vorderseite 6 deckt alle übrigen Bereiche des Flächenelements 3 derart ab, dass kein Licht hindurchtreten kann. Damit entsteht ein lichtdichter Bereich auf dem Flächenelement 3, die Vorderseite 6 mit lichtdichter Beschichtung.

Die Rückseite 5 des Flächenelements 3 ist mit satinierter Beschichtung versehen, so dass durch die Lichtaustrittsöffnung 11 hindurch die integrierbare Beleuchtungsbaugruppe 7 aus dem Fahrgastraum heraus nicht erkennbar ist und nur das Licht hindurchscheinen kann.

Der auf die Rückseite 5 mit satinierter Beschichtung zum Herstellen der Beschichtung aufgebrachte Lack, erzeugt einen Milchglaseffekt auf der Rückseite 5 des Flächenelements 3. Dieser Milchglaseffekt der satinierten Beschichtung 5 verhindert weiterhin, dass aus dem Fahrgastraum heraus die Strukturbaugruppe 2 erkennbar wird. Die Rückseite 5 mit der satinierten Beschichtung bestimmt entsprechend der ausgewählten Lackfarbe die Lichtfarbe beim Austritts des Lichts durch die Lichtaustrittsöffnung 11 aus dem Deckenteil 1.

Die Strukturbaugruppe 2 dient der Befestigung des Deckenteils 1 an der Fahrzeugoberseite und stabilisiert das Flächenelement 3. Die Strukturbaugruppe 2 besteht aus Kunststoffhutprofilen 15, in die Aluminiumvierkantformteile 17 integriert sind. Die Aluminiumvierkantformteile 17 sind verbunden mit Aluminium-U-Profilen 13, die auf der linken Seite das Scharniersystem 8 tragen und auf der rechten Seite, in der Figur 2 erkennbar, das Schloss 9. Das Flächenelement 3 weist mittig die durchgängigen Ausnehmungen 4 auf.

Die integrierbare Beleuchtungsbaugruppe 7 ist nicht dargestellt. Sie ist im Bereich oberhalb der Lichtaustrittsöffnung 11 auf beiden Seiten des Deckenelements 1, zwischen Deckenteil 1 und Fahrzeugdecke, bevorzugt am Deckenteil 1 selbst, angebracht.

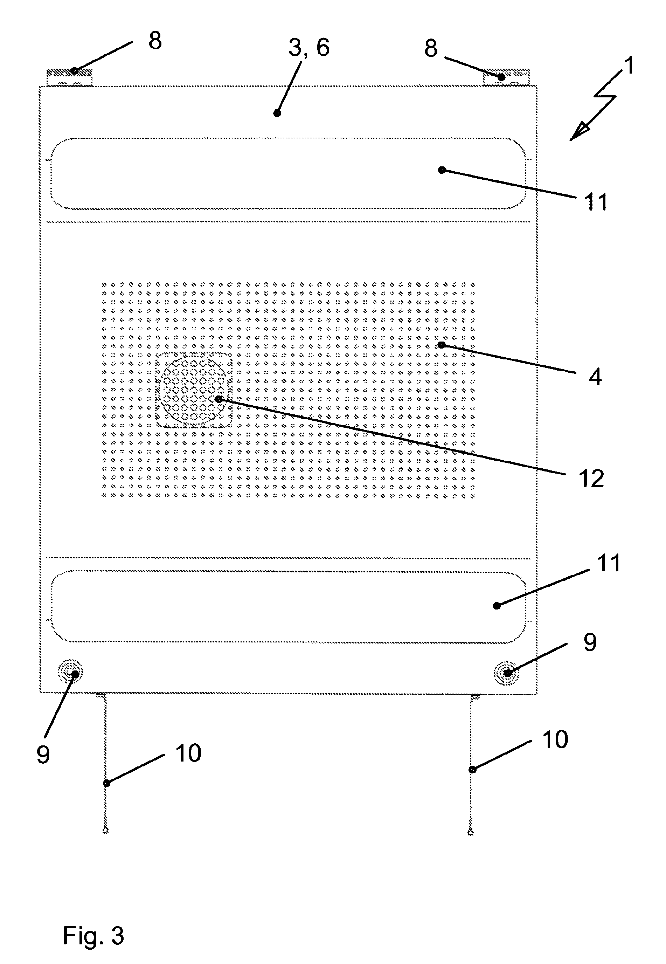

Figur 3 zeigt das Deckenteil 1 von unten, aus dem Fahrgastraum heraus betrachtet. Im oberen Bereich sind die Scharniersysteme 8 angebracht, darunter befindet sich die Lichtaustrittsöffnung 11. Ebenfalls in das Flächenelement 3 eingebracht ist der Bereich der durchgängigen Ausnehmungen 4. Innerhalb dieses Bereichs sind weiterhin die durchgängigen Ausnehmungen als Lautsprecheröffnung 12 sichtbar, die durch eine Lochung mit vergrößerten Öffnungen gebildet wird. Nach unten hin schließt sich die zweite Lichtaustrittsöffnung 11 an. Am unteren Bereich in Figur 3 sind die Schlösser 9 sowie die Fangseile 10 befestigt. Die hierbei sichtbare Vorderseite 6 mit lichtdichter Beschichtung spart die durch Maskierung bei der Beschichtung, die bevorzugt durch Lack erfolgt, gebildeten Lichtaustrittsöffnungen 11 aus, so dass durch alle anderen Bereiche des Flächenelements 3 kein Licht hindurchtreten kann.

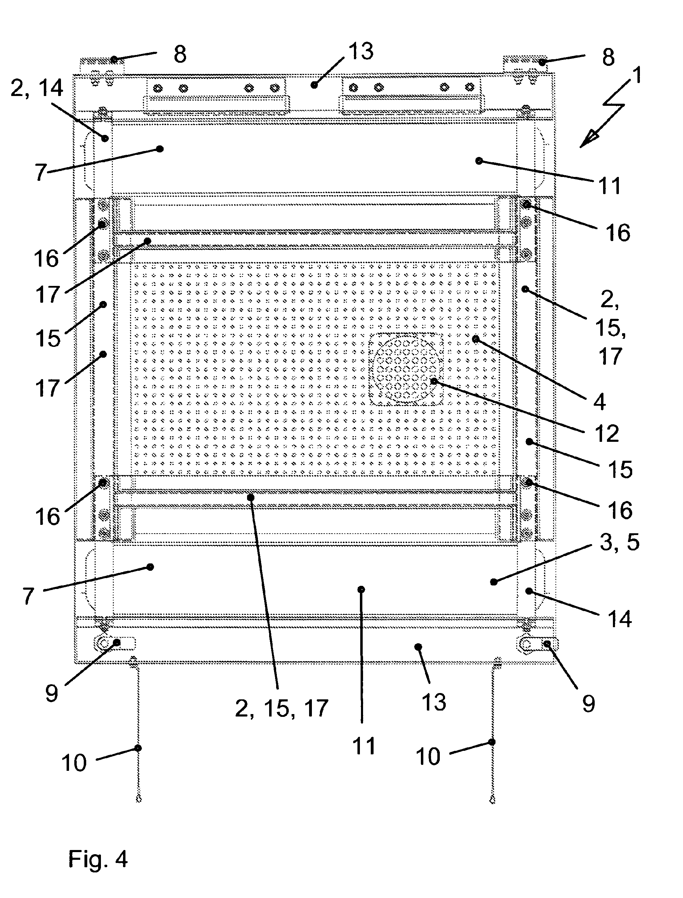

Figur 4 zeigt die Rückseite 5 des Deckenteils 1, die bei bestimmungsgemäßem Einbau aus dem Fahrgastraum heraus nicht sichtbar ist. Hierbei werden ebenfalls, in der Figur im oberen Bereich dargestellt, die Scharniersysteme 8 sichtbar. Im unteren Bereich sind die Schlösser 9 sowie die Fangseile 10 ebenso wie in den vorangegangenen Darstellungen erkennbar. Das Flächenelement 3 weist auf der gesamten Rückseite 5 satinierten Lack auf, der auch als Frostlack bezeichnet wird. Der mittlere Bereich des Flächenelement 3 weist den Bereich der durchgängigen Ausnehmungen 4 auf, in dessen Mitte sich auf der rechten Seite angeordnet die durchgängigen Ausnehmungen als Lautsprecheröffnung 12 befindet.

Die Rückansicht 5 des Deckenteils 1 wird insbesondere durch die Strukturbaugruppe 2 geprägt. Die Strukturbaugruppe 2 besteht aus Kunststoff und Metallelementen, die in Form einer Überkreuzverstärkung als Kunststoffhutprofile 15 und Aluminiumvierkantprofile 14 ausgebildet sind. Die Kunststoffhutprofile 15 überdecken im mittleren Bereich die Aluminiumvierkantprofile 14. Diese sind in dem mittleren Bereich in verdeckter Darstellung gezeigt. Die Befestigung der Aluminiumvierkantprofile 14 an den Kunststoffhutprofilen 15 erfolgt durch Schrauben 16.

Im oberen sowie im unteren Bereich der Figur 4 sind die Aluminium-U-Profile 13 dargestellt, die mit den Aluminiumvierkantprofilen 14 verschraubt sind. Die Verstärkung in horizontaler Richtung, bezogen auf die Darstellung in Figur 4, erfolgt durch die Aluminiumvierkanthohlprofile 17. Auch die vertikale Verstärkung erfolgt durch Aluminiumvierkanthohlprofile 17, in die die Aluminiumvierkantprofile 14 eingeschoben und darin befestigt sind.

Die Kunststoffhutprofile 15 sind mit dem Flächenelement 3 verklebt. Damit erfolgt zugleich die Fixierung der Aluminiumvierkanthohlprofile 17 innerhalb der Kunststoffhutprofile 15 sowie auf dem Flächenelement 3. Auch die Verbindung des Flächenelements 3 mit dem Aluminium-U-Profil 13 erfolgt durch Verklebung. Die an dem Aluminium-U-Profil 13 befestigten Scharniersysteme 8 sowie Schlösser 9 sind durch Verschraubung angebracht.

### LISTE DER BEZUGSZEICHEN

- 1: Deckenteil
- 2: Strukturbaugruppe
- 3: Flächenelement
- 4: durchgängige Ausnehmungen
- 5: Rückseite mit satinierter Beschichtung
- 6: Vorderseite mit lichtdichter Beschichtung
- 7: integrierbare Beleuchtungsbaugruppe
- 8: Scharniersystem
- 9: Schloss
- 10: Fangseil
- 11: Lichtaustrittsöffnung
- 12: durchgängige Ausnehmungen als Lautsprecheröffnung
- 13: Aluminium-U-Profile
- 14: Aluminiumvierkantprofile
- 15: Kunststoffhutprofile
- 16: Schrauben
- 17: Aluminiumvierkanthohlprofile

## Patentansprüche

1. Deckenteil zur Fahrzeuginnenverkleidung, **gekennzeichnet durch**
- eine Strukturbaugruppe (2) aus Profilelementen, die in Form einer Überkreuzverstärkung angeordnet sind und
- ein Flächenelement (3), das als Hutprofil mit trapezförmigen Schenkeln aus einem lichtdurchlässigen Kunststoff ausgebildet ist und mehrere Funktionsbereiche aufweist, wobei
- die Strukturbaugruppe (2) mit der Rückseite (5) des Flächenelementes (3) und dieses dreidimensional stabilisierend verbunden ist.

2. Deckenteil nach Anspruch 1, **dadurch gekennzeichnet, dass** das Flächenelement (3) zur Ausbildung von licht-, luft- und schalldurchlässigen Funktionsbereichen Teilbereiche des Flächenelementes (3) auf der Rückseite (5) eine satinierte Beschichtung und auf Vorderseite (6) eine lichtdichte Beschichtung aufweisen und dass weiterhin am Flächenelement (3) ein Bereich mit durchgängigen Ausnehmungen (4, 12) am Flächenelement (3) ausgebildet ist.

3. Deckenteil nach Anspruch 1 oder 2, **dadurch gekennzeichnet, dass** die Profilelemente der Strukturbaugruppe (2) als Kunststoffhutprofile (15), Aluminiumvierkantformteile (14) und Aluminiumvierkanthohlprofile (17) ausgebildet sind.

4. Deckenteil nach einem der Ansprüche 1 bis 3, **dadurch gekennzeichnet, dass** die Strukturbaugruppe (2) und / oder das Flächenelement (3) eine Beleuchtungsbaugruppe (7) aufnehmbar ausgebildet ist.

5. Deckenteil nach einem der Ansprüche 1 bis 4, **dadurch gekennzeichnet, dass** das Flächenelement (3) aus einem thermoplastischen Werkstoff besteht.

6. Deckenteil nach einem der Ansprüche 1 bis 5, **dadurch gekennzeichnet, dass** als durchgängige Ausnehmungen (4, 12) eine gestanzte Lochung im Flächenelement (3) vorgesehen ist.

7. Deckenteil nach einem der Ansprüche 1 bis 6, **dadurch gekennzeichnet, dass** der Funktionsbereich der Lichtaustrittsöffnung (11) mittels einer lichtdichten Beschichtung der Vorderseite (6) des lichtdurchlässigen Flächenelements (3) durch Maskierung ausgebildet ist.

8. Deckenteil nach einem der Ansprüche 1 bis 7, **dadurch gekennzeichnet, dass** das die Lichttemperatur beim Austritts des Lichts durch die Lichtaustrittsöffnung (11) aus dem Deckenteil (1) mittels der satinierten Beschichtung der Rückseite (5) des Flächenelementes (3) auswählbar ist.

9. Deckenteil nach einem der Ansprüche 1 bis 8, **dadurch gekennzeichnet, dass** Fangseile (10) am Deckenteil (1) vorgesehen sind, die beim Öffnen der Deckenverkleidung das Herunterklappen des Deckenteils (1) begrenzen.

10. Deckenteil nach einem der Ansprüche 1 bis 9, **dadurch gekennzeichnet, dass** ein Scharniersystem (8) und ein Schloss (9) am Deckenteil (1) vorgesehen sind.

11. Deckenteil nach einem der Ansprüche 1 bis 10, **dadurch gekennzeichnet, dass** die Beschichtung des Flächenelementes (3) als Lack ausgebildet ist.

## Claims

1. A ceiling element for the internal lining of a vehicle, **characterized by**
- a structure assembly (2) of profile elements, which are arranged in the form of a cross-over reinforcement, and
- a surface element (3), which is constructed as a hat-like profile with trapezoidal side pieces made of a translucent plastic and has several functional areas, wherein
- the structure assembly (2) is connected with the rear side (5) of the surface element (3) and stabilizing the latter three-dimensionally.

2. The ceiling element according to Claim 1, **characterized in that** on the surface element (3) for the formation of functional areas permeable to light, air and sound, partial areas of the surface element (3) on the rear side (5) have a satined coating and on the front side (6) have an opaque coating and that in addition on the surface element (3) an area is formed with continuous openings (4, 12) on the surface element (3).

3. The ceiling element according to Claim 1 or 2, **characterized in that** the profile elements of the structure assembly (2) are constructed as plastic hat-like profiles (15), aluminium square shaped parts (14) and aluminium square hollow profiles (17).

4. The ceiling element according to one of Claims 1 to 3, **characterized in that** the structure assembly (2) and/or the surface element (3) is constructed so as to be able to receive a lighting assembly (7).

5. The ceiling element according to one of Claims 1 to 4, **characterized in that** the surface element (3) consists of a thermoplastic material.

6. The ceiling element according to one of Claims 1 to 5, **characterized in that** as continuous openings (4, 12) a punched perforation is provided in the surface element (3).

7. The ceiling element according to one of Claims 1 to 6, **characterized in that** the functional area of the light outlet opening (11) is formed by masking by means of an opaque coating of the front side (6) of the translucent surface element (3).

8. The ceiling element according to one of Claims 1 to 7, **characterized in that** the light temperature on emergence of the light through the light outlet opening (11) from the ceiling element (1) is able to be selected by means of the satined coating of the rear side (5) of the surface element (3).

9. The ceiling element according to one of Claims 1 to 8, **characterized in that** retaining cables (10) are provided on the ceiling element (1), which on opening of the ceiling lining delimit the folding down of the ceiling element (1).

10. The ceiling element according to one of Claims 1 to 9, **characterized in that** a hinge system (8) and a lock (9) are provided on the ceiling element (1).

11. The ceiling element according to one of Claims 1 to 10, **characterized in that** the coating of the surface element (3) is formed as a lacquer.

## Revendications

1. Partie de plafond pour l'habillage interne de véhicule, **caractérisée par**
- un ensemble de structure (2) à base d'éléments de profilé, qui sont disposés sous forme d'un renfort croisé, et
- un élément de surface (3), qui est conçu sous forme de profilé en chapeau avec des branches trapézoïdales à base d'un plastique transparent et présente plusieurs zones fonctionnelles,
- l'ensemble de structure (2) étant relié au côté arrière (5) de l'élément de surface (3) et en stabilisant celui-ci en trois dimensions.

2. Partie de plafond selon la revendication 1, **caractérisée en ce que**, sur l'élément de surface (3) et pour la réalisation de zones fonctionnelles étanches à la lumière, à l'air et au son, des zones partielles de l'élément de surface (3) présentent un revêtement satiné sur le côté arrière (5) et un revêtement étanche à la lumière sur le côté avant (6) et **en ce que**, également sur l'élément de surface (3), une zone est conçue avec des évidements (4, 12) continus sur l'élément de surface (3).

3. Partie de plafond selon la revendication 1 ou 2, **caractérisée en ce que** les éléments de profilé de l'ensemble de structure (2) sont conçus sous forme de profilés en chapeau à base de plastique (15), de pièces moulées carrées en aluminium (14) et sous forme de profilés creux carrés en aluminium (17).

4. Partie de plafond selon l'une des revendications 1 à 3, **caractérisée en ce que** l'ensemble de structure (2) et/ou l'élément de surface (3) est conçu de façon à pouvoir recevoir un ensemble d'éclairage (7).

5. Partie de plafond selon l'une des revendications 1 à 4, **caractérisée en ce que** l'élément de surface (3) est à base d'un matériau thermoplastique.

6. Partie de plafond selon l'une des revendications 1 à 5, **caractérisée en ce qu'**une perforation découpée est prévue dans l'élément de surface (3) sous forme d'évidements (4, 12) continus.

7. Partie de plafond selon l'une des revendications 1 à 6, **caractérisée en ce que** la zone fonctionnelle de l'ouverture de sortie de lumière (11) est conçue au moyen d'un revêtement étanche à la lumière du côté avant (6) de l'élément de surface (3) transparent par masquage.

8. Partie de plafond selon l'une des revendications 1 à 7, **caractérisée en ce que** la température de lumière peut être choisie, lors de la sortie de la lumière par l'ouverture de sortie de lumière (11) de la partie de plafond (1), au moyen du revêtement satiné du côté arrière (5) de l'élément de surface (3).

9. Partie de plafond selon l'une des revendications 1 à 8, **caractérisée en ce que** des câbles d'arrêt (10) sont prévus sur la partie de plafond (1), lesquels limitent l'abaissement de la partie de plafond (1) lors de l'ouverture de l'habillage de plafond.

10. Partie de plafond selon l'une des revendications 1 à 9, **caractérisée en ce qu'**un système de charnière (8) et une serrure (9) sont prévus sur la partie de plafond (1).

11. Partie de plafond selon l'une des revendications 1 à 10, **caractérisée en ce que** le revêtement de l'élément de surface (3) est conçu sous forme de laque.
